# EUROPÄISCHE PATENTANMELDUNG

(11) **EP 2 664 296 A2**
(43) Veröffentlichungstag der Anmeldung: **20.11.2013**
(21) Anmeldenummer: 13002531.5
(22) Anmeldetag: 14.05.2013
(51) Int. Cl.: A61C 13/00, A61C 1/00

(54) **Verfahren zum Herstellen eines Zahnersatzes**

(30) Priorität: 15.05.2012 AT 5812012
(71) Anmelder: STEGER, Heinrich, 39031 Bruneck (IT)
(72) Erfinder: STEGER, Heinrich, 39031 Bruneck (IT)
(74) Vertreter: Gangl, Markus

(57) **Zusammenfassung**

Verfahren zum Herstellen eines Zahnersatzes (1), mit den Schritten Herstellen eines Trägerelements (2), insbesondere eines Zahnstumpfs,rechnergesteuertes Herstellen eines Grundgerüsts (3), insbesondere einer Krone, eines Inlays, einer Brücke oder dergleichen, in einer Bearbeitungsmaschine (4) auf Basis von Grundgerüst-Modelldaten (G), Aufschichten einer härtbaren oder selbsthärtenden Oberflächenschicht (5) auf das Grundgerüst (3), rechnergesteuertes Nachbearbeiten, vorzugsweise Schleifen, der Oberflächenschicht (5) in einer Bearbeitungsmaschine (4), wobei das rechnergesteuerte Nachbearbeiten bei auf das Trägerelement (2) aufgesetztem Grundgerüst (3) durchgeführt wird.

## Beschreibung

Die Erfindung betrifft generell ein Verfahren zum Herstellen eines Zahnersatzes und eine Vorrichtung zum Herstellen eines Zahnersatzes.

In der Dentaltechnik gibt es für die Herstellung von Zahnersatz bereits die unterschiedlichsten Methoden und Verfahren. So zeigt die DE 10 2004 020 369 A1 ein gattungsfremdes Verfahren zur Herstellung eines dentalen Passkörpers, bei dem die beim Sintern auftretende Schwindung eingerechnet wird. Es erfolgt keine Aufschichtung einer härtbaren Oberflächenschicht auf das Grundgerüst.

In ähnlicher Art und Weise zeigt die ebenfalls gattungsfremde DE 103 10 751 B3 ein Verfahren zur Herstellung von vollkeramischen Brückengerüsten für Brücken als Zahnersatz. Es ist auch hierin keine Aufschichtung gezeigt sondern es wird über Scannerdaten eine Überdimensionierung berechnet, daraus digitale Fräsdaten erstellt und anschließend in einer Fräsvorrichtung überschüssige Materialanteile abgetragen.

Die ebenfalls gattungsfremde DE 42 19 734 A1 zeigt zwar Keramikschichttechniken, bei denen ein computerunterstütztes Nachschleifen der Krone beschrieben ist. Nachteilig bei dieser Apparatur ist jedoch, dass diese nur für in vivo Behandlungen ausgelegt ist. Es muss auch eine aufwändige Abtastung erfolgen und es erfolgt somit keine Zahnstumpfherstellung in einer separaten Maschine. Zudem ist es für den zu behandelnden Patienten sehr unangenehm, wenn große Apparaturen direkt im Mund, z.B. für das Nachschleifen von Keramikschichten, eingesetzt werden.

Die Erfindung betrifft vielmehr ein Verfahren zum Herstellen eines Zahnersatzes, mit den Schritten Herstellen eines Trägerelements, insbesondere eines Zahnstumpfs, rechnergesteuertes Herstellen eines Grundgerüsts, insbesondere einer Krone, eines Inlays, einer Brücke, eines Dentalgerüsts, eines fixen oder herausnehmbaren Zahnersatzes oder einer Dentalrestauration, in einer Bearbeitungsmaschine auf Basis von Grundgerüst-Modelldaten und Aufschichten einer härtbaren oder selbsthärtenden Oberflächenschicht auf das Grundgerüst.

Bei bisher bekannten Verfahren wird zunächst ein Trägerelement hergestellt und auf dieses Trägerelement das - meist gefräste - Grundgerüst aufgesetzt. Anschließend wird von einem Zahntechniker eine Oberflächenschicht aufgeschichtet, welche dann insbesondere in einem Sinterofen aushärtet. Danach wird mit entsprechenden Geräten vom Zahntechniker die überdimensioniert aufgebrachte Oberflächenschicht auf eine ästhetisch passende Dicke manuell abgeschliffen. Nachteilig dabei ist, dass dies arbeitsintensiv und ungenau ist.

Ein solches nachteiliges Verfahren zum Erzeugen einer Dentalprothese mit einem Gerüst und einer Verblendung ist in der EP 1 954 211 B1 gezeigt. Dabei wird die Verblendung durch Einfüllen eines Verblendmaterials in eine Negativform und anschließendem Aushärten hergestellt. Es ist aber auch angeführt, dass eine Verblendung mittels Fräßen, 3D-Printen und/oder Stereolithographie nicht auf dem Trägerelement sondern separat erzeugt wird. Die Verblendung kann dabei zunächst größer gestaltet werden als erforderlich. Der Zahntechniker kann dann bspw. das verblendete Gerüst in einen Artikulator setzen und überschüssiges Verblendmaterial durch Schleifen oder Fräsen mit den besagten Nachteilen entfernen.

Im Speziellen betrifft die Erfindung auch noch den zusätzlichen Schritt rechnergesteuertes Nachbearbeiten, vorzugsweise Schleifen, der Oberflächenschicht in einer Bearbeitungsmaschine. Dies erlaubt ein exaktes, automatisches und schnelles Nachschleifen der überdimensioniert aufgetragenen Oberflächenschicht. Beispiele dafür gehen aus der DE 199 22 870 A1, der DE 10 2009 011 175 A1 und dem darin beschriebenen CICERO-Verfahren hervor.

Das demgemäß rechnergesteuert hergestellte Grundgerüst hat aber nach dem Sintern keine Ansatzpunkte mehr für eine exakte Positionierung in der Bearbeitungsmaschine. Die genauen Daten könnten bspw. wieder über eine Scanvorrichtung eingescannt werden. Jedoch ist dies umständlich.

Die Aufgabe der vorliegenden Erfindung besteht daher darin, ein gegenüber dem Stand der Technik verbessertes Verfahren und eine verbesserte Vorrichtung zum Herstellen von Zahnersatz zu schaffen. Insbesondere soll der entstehende Zahnersatz eine schnell herstellbare, einwandfreie und exakte Oberfläche und Größe aufweisen. Vor allem soll das Nachbearbeiten schnell und einfach erfolgen können.

Dies wird durch ein Verfahren mit den Merkmalen von Anspruch 1 erreicht. Bevorzugte Ausführungsvarianten sind in den Unteransprüchen angegeben. Demnach ist erfindungsgemäß vorgesehen, dass das rechnergesteuerte Nachbearbeiten bei auf das Trägerelement aufgesetztem Grundgerüst durchgeführt wird.

Grundsätzlich ist es möglich, dass das Trägerelement bspw. über ein Negativformverfahren hergestellt wird. Um dann aber exakte Daten des Trägerelements zu erhalten, muss ein umständlicher weiterer Scanvorgang des Trägerelements erfolgen. Zudem muss auch ein Scanvorgang für die Position des Trägerelements in der Nachschleifmaschine erfolgen. Um diese Nachteile zu vermeiden ist deshalb bevorzugt vorgesehen, dass das Trägerelement in einer Bearbeitungsmaschine auf Basis von Trägerelement-Modelldaten hergestellt, vorzugsweise gefräst, wird.

Ein besonderer Vorteil, vor allem für das Vermeiden umständlicher Scanvorgänge, ist dann gegeben, wenn die Grundgerüst-Modelldaten mit den Trägerelement-Modelldaten verknüpft werden und die aufgeschichtete Oberflächenschicht auf eine zu den verknüpften Modelldaten addierte Schichtdicke abgeschliffen wird. Vor allem wenn das Trägerelement beim Herstellen, beim Aufsetzen des Grundgerüsts und beim Schleifen der Oberflächenschicht an derselben Position in der, die Herstellung des Trägerelements durchführenden, Bearbeitungsmaschine verbleibt, kann durch einfache Rechenvorgänge ein maschinelles Abschleifen der aufgebrachten Oberflächenschicht erfolgen. Es werden einfach auf die ohnehin vorhandenen Trägerelementmodelldaten die bekannten Grundgerüstmodelldaten aufgerechnet. Zu diesen verknüpften Modelldaten wird dann die gewünschte bzw. festlegbare Schichtdicke hinzu addiert. Basierend auf diesen Daten wird dann die überdimensioniert aufgetragene Oberflächenschicht abgeschliffen.

Es soll prinzipiell nicht ausgeschlossen werden, dass das Aufschichten der Oberflächenschicht auch maschinell erfolgt. Bevorzugt wird jedoch von einem Zahntechniker die Oberflächenschicht händisch auf das Grundgerüst aufgeschichtet. Dieser kann in sensiblen Bereichen seine Erfahrung bei der Aufbringung des Oberflächenmaterials einfließen lassen.

Prinzipiell kann das Grundgerüst durch 3D-Printen, Stereolithographie oder ähnliches hergestellt werden. Bevorzugt wird das Grundgerüst in der Bearbeitungsmaschine durch Fräsen hergestellt. Dabei können Rapid Prototyping Verfahren eingesetzt werden.

Je nach verwendetem Material (Zirkon, Keramik, Kunststoff, Hybridpolymere, Metall oder dergleichen) kann das Grundgerüst durch Sintern in einem Sinterofen oder durch Polymerisierung gehärtet werden. Als aufgeschichtete Oberflächenschicht kann Kunststoff, Keramik oder dergleichen. verwendet werden. Zum Härten dieser Materialien kann bei Keramik eine Sinterung erfolgen oder bei Kunststoff eine Polymerisierung.

Für eine Vorrichtung mit den Merkmalen des Oberbegriffs von Anspruch 9 wird die erfindungsgemäße Aufgabe dadurch gelöst, dass eine auf das Grundgerüst aufgeschichtete, gehärtete Oberflächenschicht durch die Bearbeitungsmaschine zum Herstellen des Trägerelements schleifbar ist, wobei der Bearbeitungsmaschine von der Rechnereinheit die Trägerelement-Modelldaten und die Grundgerüst-Modelldaten als verknüpfte Modelldaten zuführbar sind. Somit hat die Rechnereinheit vor allem die Aufgabe, die zur Verfügung stehenden Modelldaten zu verknüpfen und der Bearbeitungsmaschine entsprechende Daten zur Verfügung zu stellen.

Bevorzugt ist hierzu auch vorgesehen, dass die aufgeschichtete Oberflächenschicht auf eine zu den verknüpften Modelldaten addierte Schichtdicke abschleifbar ist.

Je nach Größe und Optimierungsgrad des Zahnlabors können im Zahnlabor mehrere ähnliche oder gleichartige Bearbeitungsmaschinen vorhanden sein, wobei die Herstellung des Trägerelements und des Grundgerüsts in verschiedenen Geräten durchgeführt werden kann. Um ein kostengünstiges Herstellen eines Zahnersatzes zu ermöglichen, ist bevorzugt vorgesehen, dass die Bearbeitungsmaschine zum Herstellen des Trägerelements auch die Bearbeitungsmaschine zum Herstellen des Grundgerüsts ist. D.h., zunächst wird das Grundgerüst in der Bearbeitungsmaschine hergestellt. Nach der Entnahme wird der Bearbeitungsblock für das Trägerelement eingespannt. Während dann die Bearbeitungsmaschine das Trägerelement fräst, kann vom Zahntechniker das bereits entnommene Grundgerüst mit einer Oberflächenschicht versehen werden, welche danach selbst aushärtet oder gesintert, gebrannt oder thermisch behandelt wird. Sobald das Grundgerüst gehärtet ist, wird es auf das noch immer in der Bearbeitungsmaschine eingespannte Trägerelement aufgesetzt und maschinell - bei Bedarf mehrmals - nachgeschliffen.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1 bis 5: einen schematischen Ablauf eines Herstellungsverfahrens mit Vorrichtungen zum Herstellen des Zahnersatzes,
- Fig. 6 bis 11: Abbildungen des Zahnersatzes samt Trägerelement während der einzelnen Herstellungsschritte,
- Fig. 12: eine perspektivische Darstellung einer Vorrichtung zum Herstellen eines Zahnersatzes und
- Fig. 13: eine perspektivische Darstellung eines Sinterofens.

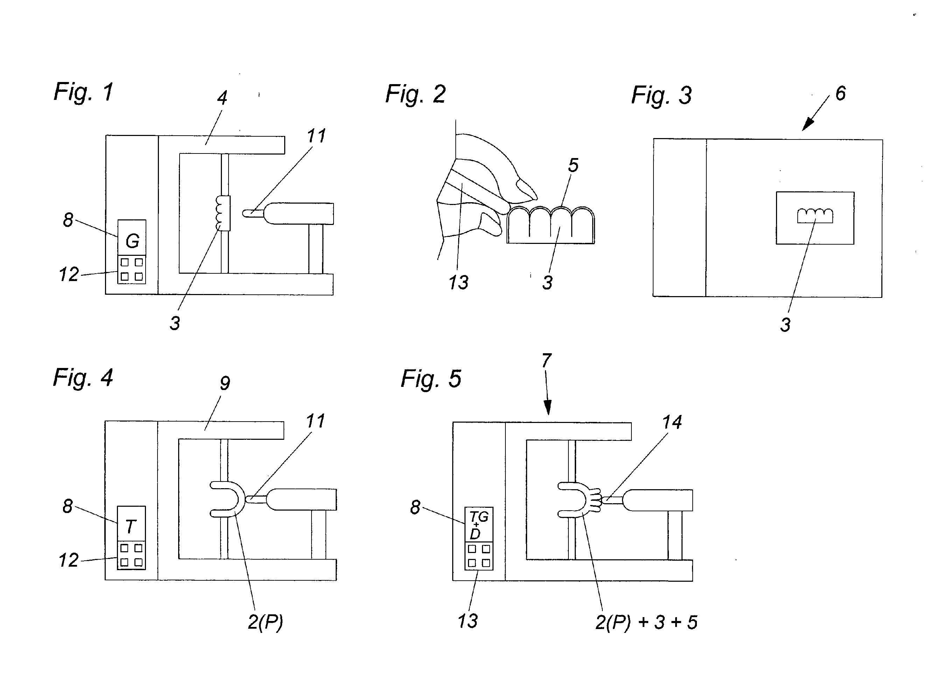

Fig. 1 zeigt eine Bearbeitungsmaschine 4, die Teil einer Vorrichtung 7 zur Herstellung eines Zahnersatzes 1 ist. Diese Bearbeitungsmaschine 4 kann als eine CAD-CAM-Einheit ausgebildet sein, wobei die Bearbeitungsmaschine 4 von einer Rechnereinheit 8 gesteuert bzw. geregelt wird. Ein Zahntechniker kann über das Bedienfeld 12 Einstellungen in einer Steuer- oder Regeleinheit vornehmen. Diese Steuer- oder Regeleinheit kann von einer maschineninternen oder maschinenexternen Recheneinheit gebildet werden. Gemäß Fig. 1 ist ein fräsbarer, aus einem Grundmaterial bestehender Block in die Bearbeitungsmaschine 4 eingespannt, welcher bereits durch ein Bearbeitungsmittel (Fräser 11) abhängig von in der Rechnereinheit 8 hinterlegten Grundgerüst-Modelldaten G zu einem Grundgerüst 3 (z.B. Krone, Brücke, Inlay, Dentalgerüst, fixer oder herausnehmbarer Zahnersatz, Dentalrestauration usw.) gefräst wurde.

Nach diesem Bearbeitungsvorgang wird zunächst - je nach verwendetem Material (nicht bei Kunststoff) - noch eine Sinterung in einem Sinterofen 6 bzw. einem Keramikofen durchgeführt oder direkt gemäß Fig. 2 händisch über ein Aufschichtgerät 13 in Form eines Pinsels oder eines Dosiergeräts (z. B. Spritze) die Oberflächenschicht 5 überdimensioniert durch einen Zahntechniker aufgebracht.

Nach erfolgter Aufschichtung wird gemäß Fig. 3 das Grundgerüst 3 samt Oberflächenschicht 5 in einem Sinterofen 6 ausgehärtet. Entweder gleichzeitig mit dem Aufschichten und Sintern oder zeitlich unabhängig davon, erfolgt gemäß Fig. 4 das Herstellen, vorzugsweise Fräsen, des Trägerelements 2 aus einem Basisblock. Dieser Block wird dabei vor Bearbeitungsbeginn einmal in der Bearbeitungsmaschine 9 eingespannt und verbleibt in dieser Position P. Gesteuert von der Rechnereinheit 8 wird dann vom Bearbeitungsmittel (Fräser 11) der Basisblock anhand der in der Rechnereinheit 8 hinterlegten Trägerelement-Modelldaten T bearbeitet bzw. gefräst.

Nachdem das Trägerelement 2 fertig gefräst ist, verbleibt es in unveränderter Position P in der Bearbeitungsmaschine 9 (siehe Fig. 5). Das fertig gesinterte, überdimensionierte Grundgerüst 3 wird anschließend auf das in der Position P verbliebene Trägerelement 2 aufgesteckt, wobei es auch über ein Haftmittel oder mechanisch, pneumatisch, hydraulisch oder auf ähnliche Art fixiert werden kann. Das mit der leicht überkonturierten Oberflächenschicht 5 versehene Grundgerüst 3 wird dann über ein Bearbeitungsmittel (zum Beispiel ein Schleifer 14, bevorzugt in Form eines Diamantschleifers mit Kühlvorrichtung) bearbeitet bzw. abgeschliffen. Dazu wird von der Rechnereinheit 8 aus der bekannten Position P des Trägerelements 2 mit den ebenfalls bekannten Trägerelement-Modelldaten T und Grundgerüst-Modelldaten G verknüpfte Modelldaten TG berechnet. Zu diesen verknüpften Modelldaten TG wird eine gewünschte Schichtdicke D für die Oberflächenschicht 5 addiert. Diese Schichtdicke D kann an verschiedenen Stellen unterschiedlich dick sein. Sobald die Oberflächenschicht 5 auf die gewünschte Schichtdicke D abgeschliffen wurde, wird der fertige Zahnersatz 1 entnommen, eventuell noch nachbearbeitet und gefärbt und kann dann einem Patienten eingesetzt werden.

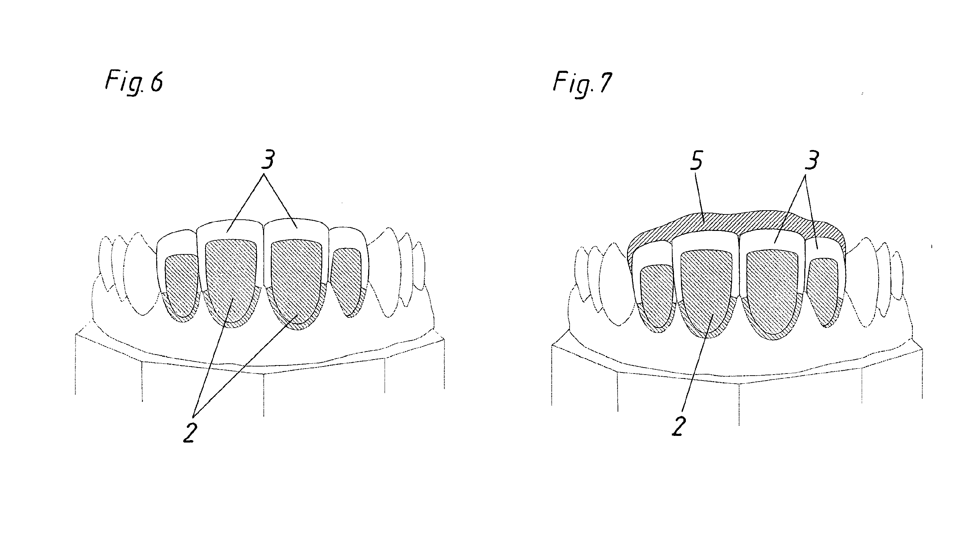

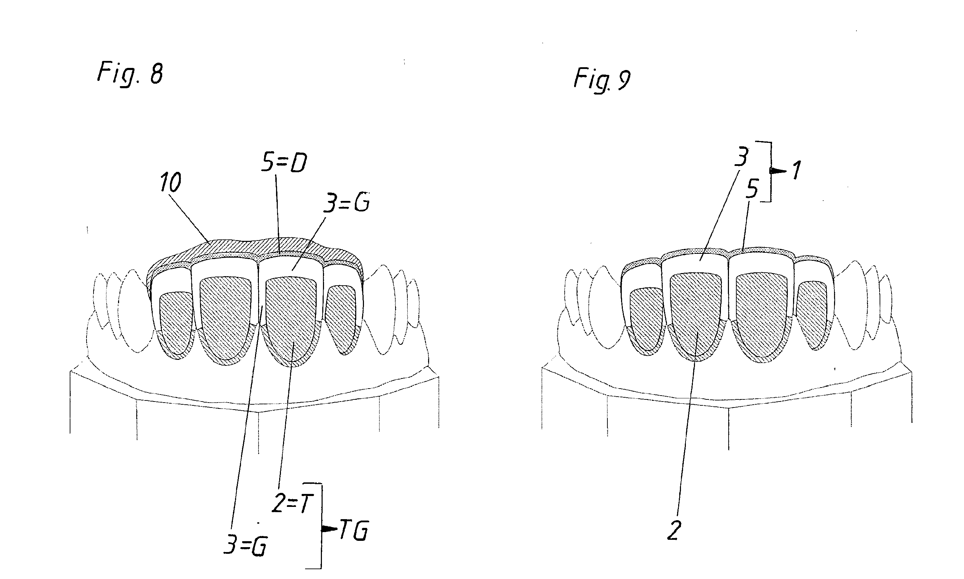

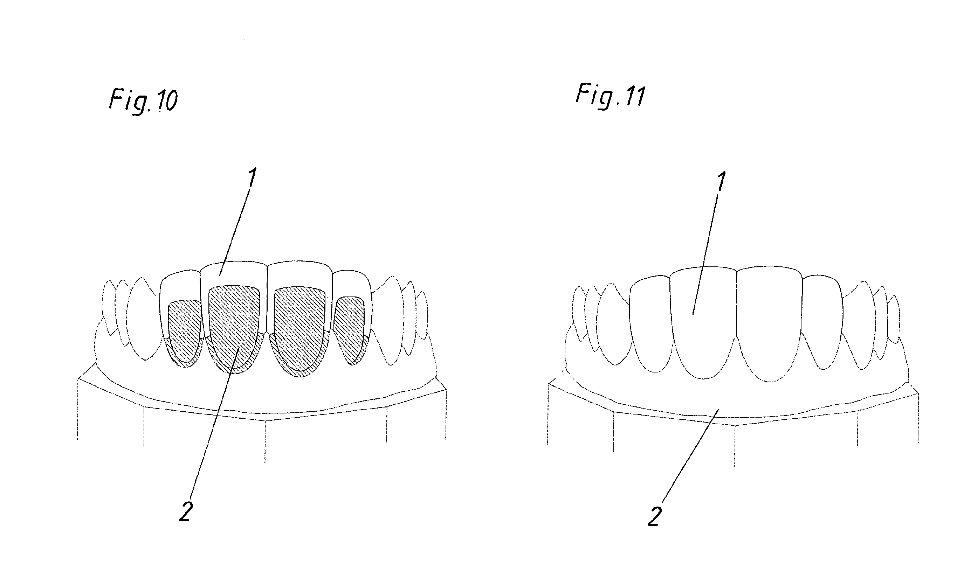

In Fig. 6 ist ersichtlich, wie ein rechnergesteuert hergestelltes Grundgerüst 3 auf ein Trägerelement 2 aufgesetzt ist. Gemäß Fig. 7 wird dann eine Oberflächenschicht 5 überkonturiert aufgetragen. In Fig. 8 ist der Rechenvorgang in der Rechnereinheit 8 veranschaulicht, wobei aus den vorhandenen Trägerelement-Modelldaten T für das Trägerelement 2 und den verknüpften Grundgerüst-Modelldaten G für das Grundgerüst 3 verknüpfte Modelldaten TG berechnet werden, zu welchen die gewünschte Schichtdicke D für die Oberflächenschicht 5 hinzu gerechnet wird. Daraus ergibt sich der Bereich 10 (Überschussmaterial), welcher gemäß Fig. 9 (korrespondiert mit Fig. 5) abgeschliffen wurde. Gemäß Fig. 10 ist dargestellt, dass das Grundgerüst 3 und die Oberflächenschicht 5 fortan eine Einheit als Zahnersatz 1 bilden. In Fig. 11 sind die im Inneren des Zahnersatzes 1 befindlichen Zahnstümpfe des Trägerelements 2 nicht mehr dargestellt. Der Zahnersatz 1 kann dann vom Trägerelement 2 abgenommen und dem Patienten eingesetzt werden.

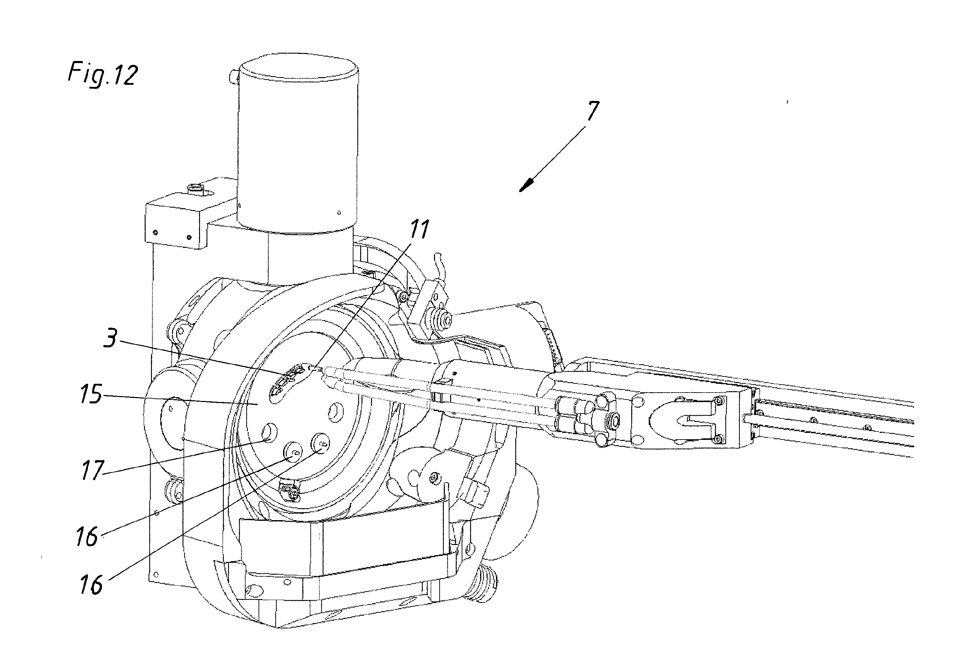

Fig. 12 zeigt eine Vorrichtung 7 zur Herstellung eines Zahnersatzes 1 korrespondierend zu Fig. 4. In einen sogenannten "Orbit", der teil der Bearbeitungsmaschine 9 ist, ist für die direkte Bearbeitung eine Grundplatte 15 aus Metall, Gips, Kunststoff oder dergleichen eingespannt, aus welchem ein Trägerelement 2 über den Fräser 11 gefräst wird. Die Größe und Anordnung dieser Grundplatte 15 ist an sich beliebig und kann an die Größe des herzustellenden Trägerelements 2 entsprechend angepasst werden.

Alternativ dazu ist es auch möglich, dass die Grundplatte 15 als eine Art Zwischenträger fungiert. Dies ist vor allem bei der Herstellung kleinerer Trägerelemente 2 (z. B. einzelner Zahstümpfe) von Vorteil. Diese kleinen Trägerelemente 2 werden dann indirekt über die Grundplatte 15 in die Bearbeitungsmaschine 9 ("Orbit") eingespannt. Dafür können in der Grundplatte 15 Ausnehmungen vorgesehen sein, in die zum Beispiel für Einzelarbeiten Spezialelemente 16 eingesetzt sind und somit indirekt an der Bearbeitungsmaschine 9 befestigt sind. Diese Spezialelemente 16 sind bevorzugt aus Kunststoff gefertigt und sind in die Grundplatte 15 "eingekeilt". In jedes dieser Spezialelemente 16 wird dann ein einzelner Zahnstumpf (Trägerelement 2) gefräst. Nach dem Aufbringen eines passenden Grundgerüsts 3 mit aufgeschichteter Oberflächenschicht 5 wird dieser relativ kleine Zahnersatz wie bereits beschrieben geschliffen.

Fig. 12 zeigt somit zwei Befestigungsvarianten (direkt Herausarbeiten des Trägerelements 2 aus der Grundplatte 15 oder Verwendung der Grundplatte 15 als Zwischenträger) in einem.

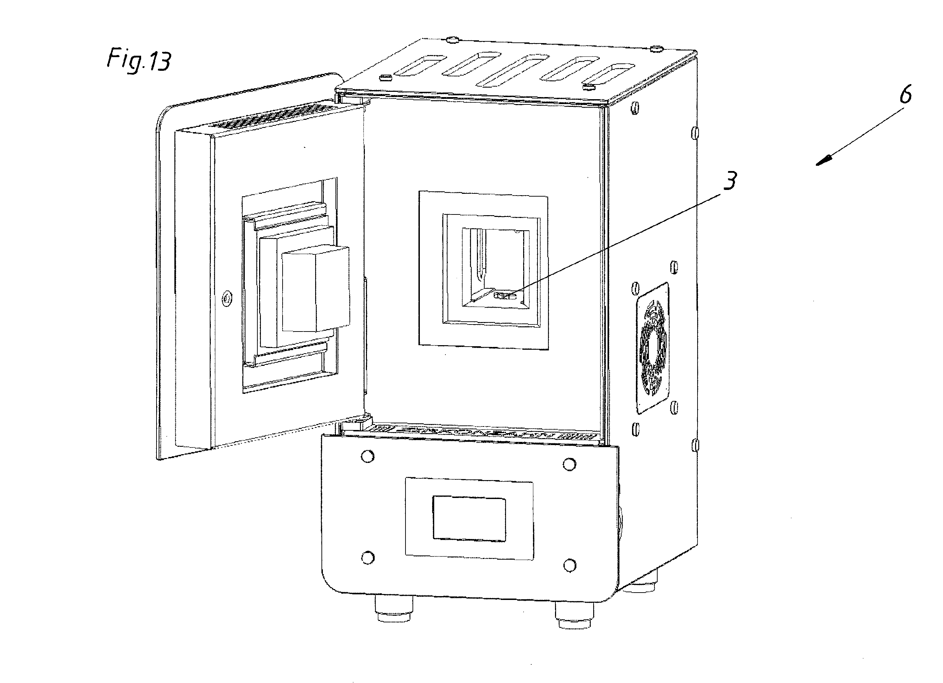

In Fig. 13 ist in einer perspektivischen Darstellung eine Sinterofen 6 mit eingelegtem Grundgerüst 3 gezeigt. Diese Fig. 13 korrespondiert mit Fig. 3.

Somit sind durch die vorliegende Erfindung ein verbessertes Verfahren und eine verbesserte Vorrichtung 7 zur Herstellung von Zahnersatz 1 gezeigt, wobei über eine Software der CAD-CAM-Einheit genau die Position des auf die Zahnstümpfe (Trägerelement 2) aufgesetzten Grundgerüsts 3 ermittelt wird. Auf diese Zahnstumpfdaten (Trägerelement-Modelldaten T) werden die virtuellen Brückendaten (Grundgerüst-Modelldaten G) überlagert, wodurch man die für die automatische Feinabschleifung notwendige Position der Brücke (Grundgerüst 3) im Schleifgerät (Bearbeitungsvorrichtung 9) kennt.

## Patentansprüche

1. Verfahren zum Herstellen eines Zahnersatzes (1), mit den Schritten:
- Herstellen eines Trägerelements (2), insbesondere eines Zahnstumpfs,
- rechnergesteuertes Herstellen eines Grundgerüsts (3), insbesondere einer Krone, eines Inlays, einer Brücke oder dergleichen, in einer Bearbeitungsmaschine (4) auf Basis von Grundgerüst-Modelldaten (G),
- Aufschichten einer härtbaren oder selbsthärtenden Oberflächenschicht (5) auf das Grundgerüst (3),
- rechnergesteuertes Nachbearbeiten, vorzugsweise Schleifen, der Oberflächenschicht (5) in einer Bearbeitungsmaschine (4),
**dadurch gekennzeichnet, dass** das rechnergesteuerte Nachbearbeiten bei auf das Trägerelement (2) aufgesetztem Grundgerüst (3) durchgeführt wird.

2. Verfahren nach Anspruch 1, **dadurch gekennzeichnet, dass** das Trägerelement (2) in einer Bearbeitungsmaschine (9) auf Basis von Trägerelement-Modelldaten (T) hergestellt, vorzugsweise gefräst, wird.

3. Verfahren nach Anspruch 1 oder 2, **dadurch gekennzeichnet, dass** die Grundgerüst-Modelldaten (G) mit den Trägerelement-Modelldaten (T) verknüpft werden und die aufgeschichtete Oberflächenschicht (5) auf eine zu den verknüpften Modelldaten (TG) addierte Schichtdicke (D) abgeschliffen wird.

4. Verfahren nach Anspruch 2 oder 3, **dadurch gekennzeichnet, dass** das Trägerelement (2) beim Herstellen, beim Aufsetzen des Grundgerüsts (3) und beim Schleifen der Oberflächenschicht (5) an derselben Position (P) in der, die Herstellung des Trägerelements (2) durchführenden, Bearbeitungsmaschine (9) verbleibt.

5. Verfahren nach einem der Ansprüche 1 bis 4, **dadurch gekennzeichnet, dass** die Oberflächenschicht (5) händisch auf das Grundgerüst (3) aufgeschichtet wird.

6. Verfahren nach einem der Ansprüche 1 bis 5, **dadurch gekennzeichnet, dass** das Grundgerüst (3) in der Bearbeitungsmaschine (4) durch Fräsen hergestellt wird.

7. Verfahren nach einem der Ansprüche 1 bis 6, **dadurch gekennzeichnet, dass** das Grundgerüst (3) durch Sintern in einem Sinterofen (6) gehärtet wird.

8. Verfahren nach einem der Ansprüche 1 bis 7, **dadurch gekennzeichnet, dass** die Oberflächenschicht (5) durch Sintern in einem Sinterofen (6) gehärtet wird.

9. Vorrichtung (7) zum Herstellen eines Zahnersatzes (1) und Durchführen eines Verfahrens nach einem der Ansprüche 1 bis 8, mit
- einer Rechnereinheit (8) zum Steuern oder Regeln der Zahnersatzherstellung,
- einer Bearbeitungsmaschine (9) zum Herstellen eines Trägerelements (2), insbesondere eines Zahnstumpfs, anhand von, von der Rechnereinheit (8) der Bearbeitungsmaschine (9) zugeführten, Trägerelement-Modelldaten (T),
- einer Bearbeitungsmaschine (4) zum Herstellen eines Grundgerüsts (3), insbesondere einer Brücke, einer Krone oder eines Inlays, anhand von, von der Rechnereinheit (8) der Bearbeitungsmaschine (4) zugeführten, Grundgerüst-Modelldaten (G),
**dadurch gekennzeichnet, dass** die Bearbeitungsmaschine (9) eine Schleifvorrichtung zum Schleifen einer auf das Grundgerüst (3) aufgeschichteten, gehärteten Oberflächenschicht (5) bildet, wobei das Schleifen anhand von, von der Rechnereinheit (8) der Bearbeitungsmaschine (9) zugeführten, auf den Trägerelement-Modelldaten (T) und den Grundgerüst-Modelldaten (G) basierenden, verknüpften Modelldaten (TG) erfolgt.

10. Vorrichtung nach Anspruch 9, **dadurch gekennzeichnet, dass** durch die Schleifvorrichtung das Schleifen der aufgeschichteten Oberflächenschicht (5) auf eine zu den verknüpften Modelldaten (TG) addierte Schichtdicke (D) erfolgt.

11. Vorrichtung nach Anspruch 9 oder 10, **dadurch gekennzeichnet, dass** die Bearbeitungsmaschine (9) zum Herstellen des Trägerelements (2) auch die Bearbeitungsmaschine (4) zum Herstellen des Grundgerüsts (3) ist.
